# EUROPÄISCHE PATENTSCHRIFT

(11) **EP 4 231 045 B1**
(45) Veröffentlichungstag und Bekanntmachung des Hinweises auf die Patenterteilung: **02.04.2025**
(21) Anmeldenummer: 22157102.9
(22) Anmeldetag: 16.02.2022
(51) Int. Cl.: G01S 7/481, G01S 17/42

(54) **OPTOELEKTRONISCHER SENSOR**
OPTOELECTRONIC SENSOR
CAPTEUR OPTOÉLECTRONIQUE

(43) Veröffentlichungstag der Anmeldung: 23.08.2023
(73) Patentinhaber: SICK AG, 79183 Waldkirch (DE)
(72) Erfinder: Menzel, Christoph, 79211 Denzlingen (DE); Frederick, Böckling, 79108 Freiburg (DE); Dominic, Ruh, 79102 Freiburg (DE)
(74) Vertreter: Manitz Finsterwald Patent- und Rechtsanwaltspartnerschaft mbB

(56) Entgegenhaltungen:
- EP-A1- 3 916 424
- US-A1- 2019 377 135
- US-A1- 2021 018 603

## Beschreibung

Die vorliegende Erfindung betrifft einen optoelektronischen Sensor zur Erfassung eines Objekts in einem Sichtbereich des Sensors. Der optoelektronische Sensor umfasst mehrere Lichtquellen zum Erzeugen von Sendelicht. Zudem umfasst der optoelektronische Sensor eine Sendeoptik zum Projizieren von Sendelicht in den Sichtbereich und zumindest einen Detektor zur Erfassung von von dem Objekt zurückgestrahltem Sendelicht. Die Lichtquellen geben Sendelicht an ein photonisches Netzwerk ab. Das photonische Netzwerk weist mehrere Abstrahlpunkte auf, aus welchen jeweils Sendelicht austritt bzw. welchen das Sendelicht zuführbar ist. Mehrere direkt nebeneinander liegende oder benachbarte Abstrahlpunkte sind dabei ausgebildet, Sendelicht in direkt nebeneinander liegende oder benachbarte Teil-Sichtbereiche abzustrahlen. Das photonische Netzwerk ist ausgebildet, Sendelicht derselben Lichtquelle, insbesondere wahlweise, zumindest zwei verschiedenen Abstrahlpunkten zuzuführen.

Derartige optoelektronischen Sensoren sind grundsätzlich bekannt, wobei diese Sensoren beispielsweise nach dem Tastprinzip arbeiten, bei dem ein Lichtstrahl in den Sichtbereich des Sensors ausgesandt und der von dem Objekt zurückgeworfene Lichtstrahl wieder empfangen wird, um den zurückgeworfenen Lichtstrahl auszuwerten. Dabei wird beispielsweise die Lichtlaufzeit mit einem Phasen- oder Pulsverfahren gemessen, um den Abstand des Objekts zu bestimmen. Dieses Verfahren wird auch LIDAR (Light Detection And Ranging) genannt.

Solche optoelektronischen Sensoren sind beispielsweise aus der DE 10 2020 110 142 A1 oder der EP3 916 424 A1 bekannt. Bei den bekannten Sensoren können verschiedene Lichtquellen, die beispielsweise jeweils Teil eines FMCW-Systems sind, jeweils eine Lichtquelle auf direkt benachbarte Abstrahlpunkte optisch aufgeschaltet werden. Jede Lichtquelle kann damit einen zusammenhängenden aber räumlich stark begrenzten Abschnitts des Sichtbereichs abtasten. Weiterhin ist aus der US 2021/0018603 A1 ein LIDAR bekannt, bei welchem mittels einer Butler-Matrix das Licht verschiedener Quellen auf verschiedene Ausgänge verteilt wird. Die US 2019/0377135 A1 betrifft ebenfalls ein LIDAR-System, bei welchem das Licht einer Lichtquelle über verschiedene optische Schalter verschiedenen Ausgängen zuführbar ist. Die EP 3 916 424 A1 betrifft eine Vorrichtung zur Abstandsmessung mittels FMCW-LIDAR-Technologie.

Befindet sich nun in dem Abschnitt des Sichtbereichs einer Lichtquelle kein Objekt, so kann diejenige Lichtquelle keine Daten über das Objekt gewinnen. Die Lichtquelle ist dann temporär "nutzlos".

Es ist daher die der Erfindung zugrundeliegende Aufgabe, einen optoelektronischen Sensor anzugeben, welcher eine verbesserte Datengewinnung ermöglicht.

Diese Aufgabe wird durch einen optoelektronischen Sensor gemäß Anspruch 1 gelöst.

Der erfindungsgemäße optoelektronische Sensor umfasst mehrere Lichtquellen zum Erzeugen von Sendelicht, wobei die Lichtquellen zumindest eine erste und eine zweite Lichtquelle umfassen. Zudem umfasst der optoelektronische Sensor eine Sendeoptik zum Projizieren von Sendelicht in den Sichtbereich und zumindest einen Detektor zur Erfassung von von dem Objekt zurückgestrahltem Sendelicht. Die Lichtquellen geben Sendelicht an ein photonisches Netzwerk ab. Das photonische Netzwerk weist mehrere Abstrahlpunkte auf, welchen jeweils Sendelicht jeweils genau einer Lichtquelle, bevorzugt von dem photonischen Netzwerk, zuführbar ist, wobei das Sendelicht bevorzugt aus den Abstrahlpunkten austritt, gegebenenfalls in die Sendeoptik hinein und insbesondere letztlich in den Sichtbereich. Mehrere direkt nebeneinander angeordnete oder benachbarte Abstrahlpunkte sind dabei ausgebildet, Sendelicht in, insbesondere verschiedene und/oder mehrere, nebeneinander angeordnete oder benachbarte Teil-Sichtbereiche abzustrahlen. Die benachbarten Teil-Sichtbereiche können bevorzugt direkt nebeneinander angeordnet sein. Das photonische Netzwerk ist dabei ausgebildet, Sendelicht derselben Lichtquelle, insbesondere wahlweise, zumindest zwei verschiedenen Abstrahlpunkten zuzuführen.

Der optoelektronische Sensor gemäß der Erfindung zeichnet sich dadurch aus, dass zwischen den zwei verschiedenen Abstrahlpunkten, welchen Sendelicht der ersten Lichtquelle zuführbar ist, zumindest ein Abstrahlpunkt angeordnet ist, welchem Sendelicht der zweiten Lichtquelle zuführbar ist.

Dadurch, dass zwischen zwei verschiedenen Abstrahlpunkten, welche der ersten Lichtquelle zugeordnet sind, zumindest ein Abstrahlpunkt angeordnet ist, welcher der zweiten Lichtquelle zugeordnet ist, ist es möglich, einen ersten Teil-Sichtbereich mit der ersten Lichtquelle und einen direkt benachbarten zweiten Teil-Sichtbereich mit der zweiten Lichtquelle abzutasten. Ein dritter Teil-Sichtbereich, der gegenüber dem ersten Teil-Sichtbereich an den zweiten Teil-Sichtbereich direkt angrenzt, kann dann durch die erste Lichtquelle oder eine weitere Lichtquelle abgetastet werden. Folglich ist es möglich, einen zusammenhängenden Abschnitt des Sichtbereichs mit verschiedenen Lichtquellen abzutasten. Für ein Objekt in diesem Abschnitt des Sichtbereichs können also Abtastungen mit mehreren Lichtquellen gleichzeitig vorgenommen werden, wodurch zusätzliche Informationen über das Objekt erfasst werden können, mithin folglich die Datengewinnung über das Objekt verbessert wird. Zudem kann die Geschwindigkeit der Datengewinnung erhöht werden, da die verschiedenen Lichtquellen (und damit beispielsweise verschiedene FMCW-Kanäle) für den Scan eines Abschnitts des Sichtbereichs parallel genutzt werden können.

Gemäß der Erfindung sind mehrere Lichtquellen zum Erzeugen von Sendelicht vorgesehen. Das Sendelicht tritt von den Lichtquellen zunächst in das photonische Netzwerk ein und wird von dem photonischen Netzwerk den Abstrahlpunkten zugeführt, wobei insbesondere das Sendelicht einer Lichtquelle zumindest im Wesentlichen genau einem Abstrahlpunkt zugeführt wird. Das Sendelicht kann dann aus dem photonischen Netzwerk an den Abstrahlpunkten austreten und gegebenenfalls in die Sendeoptik eintreten. Die Sendeoptik kann auch Teil der Abstrahlpunkte sein. Letztlich wird das Sendelicht in den Sichtbereich abgestrahlt und kann dort auf das Objekt treffen, welches das Sendelicht remittiert, also zurückstrahlt. Das zurückgestrahlte Sendelicht wird durch den Detektor erfasst, wodurch beispielsweise die Entfernung zwischen dem optoelektronischen Sensor und dem Objekt anhand der Lichtlaufzeit des Sendelichts erfasst werden kann. Das zurückgestrahlte Sendelicht kann insbesondere an den Abstrahlpunkten wieder in das photonische Netzwerk eintreten, auf denselben Lichtpfaden durch das photonische Netzwerk hindurchgeleitet werden, wie das Sendelicht, und auf diese Weise zum Detektor geführt werden.

Die Abstrahlpunkte können so angeordnet und/oder ausgebildet sein, dass das Sendelicht eines jeweiligen Abstrahlpunkts in eine nur von dem jeweiligen Abstrahlpunkt abgedeckte Raumrichtung abstrahlt wird. Auf diese Weise können die Abstrahlpunkte Sendelicht in mehrere, insbesondere verschiedene, bevorzugt direkt, nebeneinander angeordnete oder benachbarte Teil-Sichtbereiche abstrahlen. Für jeden Abstrahlpunkt ist somit eindeutig, in welchen Teil-Sichtbereich dieser Abstrahlpunkt Sendelicht emittiert. Zusammen mit der Entfernung des Objekts kann somit die Position des Objekts relativ zu dem optoelektronischen Sensor bestimmt werden. Zu diesem Zweck kann der optoelektronische Sensor beispielsweise eine Steuereinrichtung aufweisen, die die Lichtquellen und das photonische Netzwerk ansteuert und das vom Detektor erfasste zurückgestrahlte Sendelicht auswertet.

Die Teil-Sichtbereiche sind insbesondere voneinander getrennt und/oder überlappen sich nur mit den direkt benachbarten oder nebeneinander angeordneten Teil-Sichtbereichen. Ein Teil-Sichtbereich kann z.B. einen vorbestimmten Winkelbereich in der Ebene (bei einem zweidimensionalen Sichtbereich) oder einen vorbestimmten Raumwinkelbereich (bei einem dreidimensionalen Sichtbereich) umfassen. Der Winkelbereich kann z.B. 1 °, 2° oder 5° überspannen.

Dadurch, dass zwischen den zwei Abstrahlpunkten, welchen Sendelicht der ersten Lichtquelle zuführbar ist, zumindest ein Abstrahlpunkt angeordnet ist, welchem Sendelicht der zweiten Lichtquelle zuführbar ist, ergibt sich für den Winkel- oder Raumbereich, welcher von der ersten und/oder zweiten Lichtquelle bestrahlt werden kann, dass dieser Winkel- oder Raumbereich nicht-zusammenhängend ist. Generell kann jeder Winkel- oder Raumbereich, welcher von derselben Lichtquelle des optoelektronischen Sensors bestrahlt werden kann, nicht-zusammenhängend sein.

Bei den Lichtquellen kann es sich insbesondere um Laser handeln.

Vorteilhafte Weiterbildungen der Erfindung sind der Beschreibung, den Figuren sowie den Unteransprüchen zu entnehmen.

Gemäß einer ersten Ausführungsform umfasst das photonische Netzwerk zumindest einen optischen Schalter für jede Lichtquelle, wobei der jeweilige Schalter ausgebildet ist, Sendelicht zumindest zwei verschiedenen Lichtpfaden in dem photonischen Netzwerk zuzuleiten, insbesondere um Sendelicht, bevorzugt wahlweise, zumindest zwei verschiedenen Abstrahlpunkten zuzuführen. Durch den oder die optischen Schalter kann z.B. das Sendelicht der ersten Lichtquelle wahlweise einem ersten oder zweiten der ersten Lichtquelle zugeordneten Abstrahlpunkt zugeführt werden. Durch den Schalter können somit mit der ersten Lichtquelle verschiedene Winkel- oder Raumwinkel, d.h. verschiedene Teil-Sichtbereiche, abgetastet werden.

Gemäß einer weiteren vorteilhaften Ausführungsform umfasst das photonische Netzwerk zumindest eine Wellenleiterkreuzung, um Sendelicht der zweiten Lichtquelle einem Abstrahlpunkt zuzuführen, welcher zwischen den zwei verschiedenen Abstrahlpunkten liegt, welchen Sendelicht der ersten Lichtquelle zuführbar ist. Die Wellenleiterkreuzung kann also dazu verwendet werden, das Sendelicht der zweiten Lichtquelle einem Abstrahlpunkt zuzuführen, welcher zwischen zwei Abstrahlpunkten liegt, die der ersten Lichtquelle zugeordnet sind. Eine Wellenleiterkreuzung kann insbesondere dann benötigt werden, wenn das photonische Netzwerk in einer Ebene, beispielsweise auf einer Platine oder einem Wafer, angeordnet ist. Die Wellenleiterkreuzung kann beispielsweise zwei Eingänge und zwei Ausgänge aufweisen, die kreuzförmig und/oder diagonal zueinander angeordnet sind. An einem Kreuzungspunkt der Wellenleiterkreuzung kann ein Überlagerungsbereich vorgesehen sein, durch welchen sowohl Sendelicht des ersten Eingangs als auch Sendelicht des zweiten Eingangs hindurchgeführt wird. In dem Überlagerungsbereich kann sich somit Sendelicht zweier verschiedener Lichtquellen überlagern, wobei das Sendelicht zumindest im Wesentlichen nur einer Lichtquelle aus jeweils einem der Ausgänge austritt.

Alternativ zu solch einer planaren Anordnung ist es auch möglich, eine Wellenleiterkreuzung beispielsweise durch zwei räumlich übereinanderliegende, sich kreuzende aber voneinander getrennte Lichtleiter (z.B. separate Glasfasern) zu realisieren. Die voneinander getrennten Lichtleiter können beispielsweise sogenannte "photonic wirebonds" umfassen, bei welchen Lichtleiter dreidimensional in einen photosensitiven Resist durch Belichten geschrieben werden. Der photosensitive Resist kann nach dem Belichten entwickelt und bis auf die entstandenen Lichtleiter entfernt werden. Ebenfalls können zwei räumlich übereinander liegende, sich kreuzende aber voneinander getrennte Lichtleiter z.B. durch zwei übereinander angeordnete Platinen oder Wafer erzielt werden, wobei eine Platine bzw. ein Wafer umgedreht angeordnet ist ("flip chip bonding"). Das Sendelicht einer Lichtquelle kann dabei nur in einer der Platinen/Wafer verlaufen, wohingegen das Sendelicht einer anderen Lichtquelle zunächst in einer ersten Platine/Wafer geführt ist und dann in die zweite Platine/Wafer überführt wird, um das Kreuzen des Sendelichts zu bewirken. Nach dem Kreuzen wird das Sendelicht dann wieder in die erste Platine/Wafer zurückgeführt.

Wenn hierin von einem Eingang oder Ausgang gesprochen wird, dann bezieht sich dies üblicherweise auf die Richtung des Sendelichts, d.h. auf die Richtung von der Lichtquelle zum Objekt. Für rückgestrahltes Sendelicht kann ein Ausgang dann als Eingang und ein Eingang als Ausgang z.B. eines Schalters oder einer Wellenleiterkreuzung angesehen werden.

Wie erwähnt, kann das photonische Netzwerk in einer Ebene, beispielsweise auf einer Platine/Wafer, angeordnet sein. Das photonische Netzwerk umfasst bevorzugt keine beweglichen Teile, insbesondere für den oder die optischen Schalter und/oder die Wellenleiterkreuzung(en). Der optische Schalter kann beispielsweise einen, insbesondere einzigen, Eingang aufweisen, der mit der Lichtquelle verbunden ist. Der optische Schalter kann weiterhin zwei Ausgänge umfassen, die jeweils mit einem Lichtpfad zu zwei verschiedenen Abstrahlpunkten verbunden sind. Die Lichtpfade können in den Abstrahlpunkten enden. Die Schalter können z.B. über elektrooptische oder thermooptische Mechanismen angesteuert werden. Alternativ oder zusätzlich können die Schalter plasmonisch-photonische Schalter oder photonische Kristallschalter sein. Die Schalter können ausgebildet sein, jeweils den Hauptanteil oder den Großteil (z.B. 50%, 70%, 80% oder 90%) der Energie des Sendelichts einem einzigen der Ausgänge zuzuführen.

Ein optischer Schalter kann beispielsweise zwei benachbarte Lichtleiterfasern aufweisen, zwischen welchen durch Anlegen einer Spannung ein elektrisches Feld aufgebaut werden kann. Wird am Eingang des Schalters (d.h. am Eingang der ersten Faser) Licht eingekoppelt und es liegt eine Spannung an, dann überträgt sich das Licht zur zweiten Faser und kann an deren Ende ausgekoppelt werden. Wenn keine Spannung anliegt, verbleibt das Licht in der ersten Faser und kann in der ersten Faser beispielsweise bis zu einem Abstrahlpunkt geführt und dort ausgekoppelt werden. Übliche Schaltfrequenzen von solchen optischen Schaltern liegen im Bereich von 0,5 bis 5 MHz, so dass ein schnelles Abscannen des Sichtbereichs über verschiedene Teil-Sichtbereiche möglich ist. Alternativ oder zusätzlich können optische Schalter auch mechanisch, beispielsweise mittels Mikrospiegeln, realisiert sein. Die optischen Schalter können dazu in MEMS (Micro-Electro-Mechanical Systems) Technologie hergestellt sein.

Die Wellenleiterkreuzungen hingegen können keine Schaltwirkung aufweisen.

Gemäß einer weiteren Ausführungsform umfasst der Sensor zumindest drei, vier oder mehr als vier Lichtquellen, wobei zwischen zwei verschiedenen Abstrahlpunkten, welchen Sendelicht derselben Lichtquelle zuführbar ist, jeweils für jede andere Lichtquelle ein Abstrahlpunkt angeordnet ist, welchem Sendelicht einer der anderen Lichtquellen zugeführt werden kann. Die durch die Wellenleiterkreuzung ermöglichte Zuführung von Sendelicht einer anderen Lichtquelle zu einem Abstrahlpunkt, welcher zwischen zwei Abstrahlpunkten derselben Lichtquelle liegt ist für größere Anzahlen von Lichtquellen genauso möglich. Die Offenbarung zu der ersten und zweiten Lichtquelle gilt folglich entsprechend für größere Anzahlen von Lichtquellen.

Gemäß einer weiteren Ausführungsform weist das photonische Netzwerk eine photonische integrierte Schaltung auf, welche insbesondere den optischen Schalter und die Wellenleiterkreuzung aufweist. Die photonische integrierte Schaltung kann auch als PIC (Photonic Integrated Circuit) bezeichnet werden. Das photonische Netzwerk kann eine Vielzahl von Schaltern und Wellenleiterkreuzungen aufweisen, um somit Sendelicht der Lichtquellen einer Vielzahl von Abstrahlpunkten wahlweise zuzuführen. Die Abstrahlpunkte können Teil der photonischen integrierten Schaltung sein.

Gemäß einer weiteren Ausführungsform sind die Abstrahlpunkte entlang einer geraden Linie angeordnet. Alternativ ist zumindest die Mehrheit der Abstrahlpunkte entlang einer geraden Linie angeordnet. Die Anordnung entlang der geraden Linie kann insbesondere Teil der photonischen integrierten Schaltung sein. Die Abstrahlpunkte können in einer Ebene nebeneinanderliegend angeordnet sein, beispielsweise direkt an einer Kante der Platine oder des Wafers der photonischen integrierten Schaltung. Ebenfalls können die Lichtquellen oder zumindest Einkoppelpunkte für die Lichtquellen in das photonische Netzwerk nebeneinander in einer Ebene angeordnet sein. Aus der Anordnung in der Ebene ergibt sich die Notwendigkeit von einer oder mehreren Wellenleiterkreuzungen.

Gemäß einer alternativen Ausführungsform ist zumindest ein Teil der Abstrahlpunkte entlang einer gebogenen, elliptischen oder kreisförmigen Bahn angeordnet, welche beispielsweise um einen Objektivmittelpunkt eines Objektivs der Sendeoptik verläuft. Bei dieser Ausführungsform kann eine Kante der Platine oder des Wafers mit den an der Kante liegenden Abstrahlpunkten gebogen, elliptisch oder kreisförmig ausgebildet sein.

Gemäß einer weiteren Ausführungsform weist der optoelektronische Sensor eine Gruppe von direkt nebeneinander angeordneten Abstrahlpunkten auf, wobei die Anzahl der Abstrahlpunkte in der Gruppe der Anzahl der Lichtquellen entspricht, wobei jedem der Abstrahlpunkte in der Gruppe Sendelicht einer anderen Lichtquelle zuführbar ist. Bei einer Gruppe kann es dementsprechend um eine Anzahl von direkt nebeneinander angeordneten Abstrahlpunkten handeln. Jedem der Abstrahlpunkte in der Gruppe kann, insbesondere gleichzeitig, Sendelicht einer anderen Lichtquelle zugeführt werden. Dies bedeutet, dass es möglich ist, mit den Abstrahlpunkten einer Gruppe Sendelicht, insbesondere gleichzeitig, in die direkt nebeneinander angeordneten Teil-Sichtbereiche abzustrahlen und diese Teil-Sichtbereiche damit zu scannen.

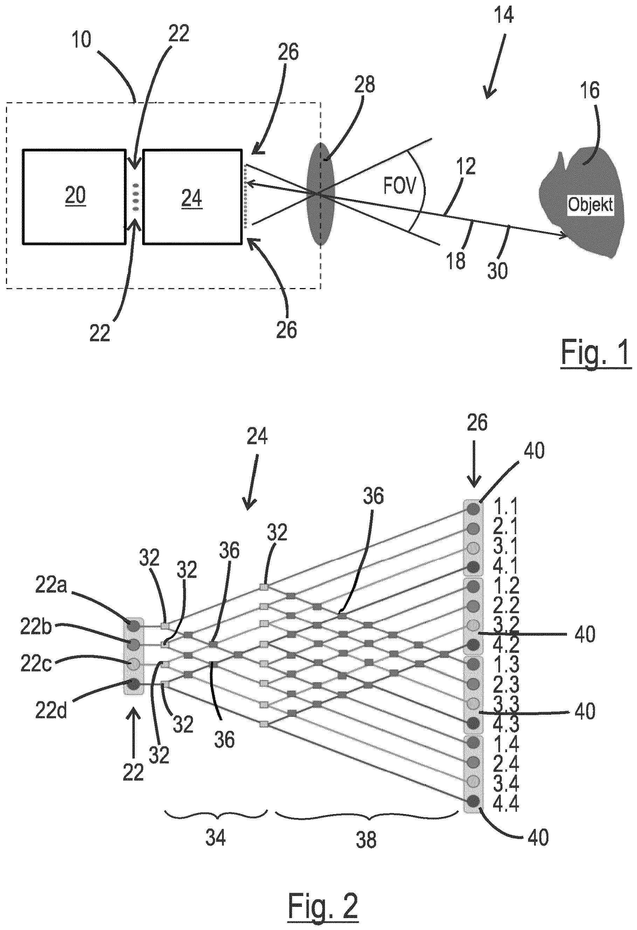

Wie später in Fig. 2 genauer dargestellt ist, können beispielsweise vier Lichtquellen und vier Gruppen vorgesehen sein. Die erste Lichtquelle kann dann mit einem Abstrahlpunkt in der ersten Gruppe, mit einem Abstrahlpunkt in der zweiten Gruppe, einem weiteren Abstrahlpunkt in der dritten Gruppe und schließlich einem Abstrahlpunkt in der vierten Gruppe wahlweise verbunden werden. Dasselbe gilt für die zweite bis vierte Lichtquelle. Auf diese Weise ergeben sich vier Gruppen mit jeweils vier Abstrahlpunkten. Zwischen zwei Abstrahlpunkten, welchen Sendelicht derselben Lichtquelle zuführbar ist, liegen bevorzugt so viele Abstrahlpunkte, wie es verbleibende Lichtquellen gibt. Jedem der dazwischenliegenden Abstrahlpunkte ist bevorzugt Sendelicht genau einer der verbleibenden Lichtquellen zuführbar.

Gemäß einer weiteren Ausführungsform sind mehrere, insbesondere gleiche oder gleichartige, Gruppen aufeinanderfolgend angeordnet. Die Abstrahlpunkte verschiedener Gruppen können somit hintereinander entlang insbesondere der geraden Linie angeordnet sein. Die Abstrahlpunkte, welchen Sendelicht verschiedener Lichtquellen zugeführt werden kann, können somit alternierend angeordnet sein. Gemeinsam können die Gruppen den gesamten Sichtbereich des Sensors abdecken, d.h. die Abstrahlpunkte der Gruppen und damit die Teil-Sichtbereiche der Gruppen decken den gesamten Sichtbereich des Sensors ab. Durch die alternierende Anordnung der Abstrahlpunkte kann jede Lichtquelle so Sendelicht in gänzlich verschiedene Richtungen des Sichtbereichs abstrahlen.

Gemäß einer weiteren Ausführungsform ist ein Teil der Abstrahlpunkte ausgebildet, Sendelicht in dichter nebeneinander angeordnete Teil-Sichtbereiche abzustrahlen, als die übrigen Abstrahlpunkte oder ein Teil der übrigen Abstrahlpunkte.

Dichter nebeneinander angeordnete Teil-Sichtbereiche können beispielsweise durch dichter nebeneinander angeordnete Abstrahlpunkte erzielt werden. Insbesondere können mehrere, z.B. zentral angeordnete, Abstrahlpunkte einen geringeren Abstand zu den jeweils direkt benachbarten Abstrahlpunkten aufweisen, als z.B. peripher angeordnete Abstrahlpunkte. Allgemein gesprochen, können nicht alle Abstrahlpunkte äquidistant zu den jeweils direkt benachbarten Abstrahlpunkten angeordnet sein. Auf diese Weise kann z.B. ein zentraler Bereich mit höherer Auflösung abgetastet werden, wohingegen Randbereiche nur mit geringerer Auflösung abgetastet werden.

Gemäß einer weiteren Ausführungsform ist der optoelektronische Sensor ausgebildet ist, einem Teil der Abstrahlpunkte Sendelicht für eine längere Zeitdauer als anderen Abstrahlpunkten, welchen Sendelicht zugeführt wird, zuzuführen. Durch die längere Zeitdauer der Zuführung von Sendelicht kann z.B. eine größere Reichweite erzielt werden. Eine solche größere Reichweite kann in Automotive-Anwendungen vorteilhaft sein, um z.B. denjenigen Teil des Sichtbereichs, welcher dem Horizont entspricht, mit einer größeren Reichweite abzutasten.

Die oben erwähnten dichter angeordneten Abstrahlpunkte und/oder Teil-Sichtbereiche können auch auf den Horizont gerichtet sein, sodass neben der erhöhten Reichweite auch eine erhöhte Auflösung in diesem Bereich erzielt werden kann. Der Bereich des Horizonts ist für Automotive-Anwendungen üblicherweise der Relevanteste.

Gemäß einer weiteren Ausführungsform umfasst das photonische Netzwerk eine erste Stufe mit optischen Schaltern und Wellenleiterkreuzungen, wobei die optischen Schalter jeweils einen Eingang und zwei Ausgänge aufweisen, wobei die Ausgänge jedes Schalters, insbesondere insgesamt, mit mehreren Wellenleiterkreuzungen verbunden sind, so dass die Ausgänge eines Schalters zumindest einen Ausgang jedes anderen Schalters einmal kreuzen.

Die Eingänge der optischen Schalter der ersten Stufe können jeweils, bevorzugt direkt, mit einer Lichtquelle gekoppelt sein. Durch den jeweiligen optischen Schalter kann das Sendelicht der Lichtquelle dann zwei verschiedenen Lichtpfaden zugeführt werden, um schließlich zu zumindest zwei verschiedenen Abstrahlpunkten zu gelangen. Um beispielsweise eine alternierende Anordnung der Abstrahlpunkte zu erreichen, sind wiederum Wellenleiterkreuzungen vorgesehen, wobei die Wellenleiterkreuzungen derart angeordnet sind, dass die Ausgänge bzw. Lichtpfade eines Schalters zumindest einen Ausgang bzw. Lichtpfad jedes anderen Schalters einmal kreuzen. Die erste Stufe umfasst somit insbesondere doppelt so viele Ausgänge wie Eingänge.

Gemäß einer weiteren Ausführungsform umfasst das photonische Netzwerk eine zweite und/oder eine oder mehrere weitere Stufen mit optischen Schaltern und Wellenleiterkreuzungen, wobei die optischen Schalter jeweils einen Eingang und zwei Ausgänge aufweisen, wobei die Ausgänge jedes Schalters, insbesondere insgesamt, mit mehreren Wellenleiterkreuzungen verbunden sind, so dass die Ausgänge eines Schalters zumindest einen Ausgang jedes anderen Schalters einmal kreuzen, wobei jeweils ein optischer Schalter der zweiten und/oder weiteren Stufe(n) für einen Ausgang der vorherigen Stufe vorgesehen ist. Die Ausgänge der vorherigen Stufe können also, bevorzugt direkt, mit jeweils einem optischen Schalter der zweiten oder weiteren Stufen gekoppelt sein. Die Ausgänge bzw. Ausgangspfade der letzten Stufe können das Sendelicht dann den Abstrahlpunkten zuführen. Für die zweite und jede weitere Stufe gilt wiederum, dass zur Schaffung von alternierenden Abstrahlpunkten die Ausgänge bzw. Ausgangspfade jedes Schalters zumindest einen Ausgangspfad jedes anderen Schalters dieser Stufe einmal kreuzen, wie dies später in Fig. 2 dargestellt ist.

Für jede Stufe verdoppelt sich somit insbesondere die Zahl der Abstrahlpunkte, welchen Sendelicht zuführbar ist.

Es ist auch möglich, anstelle von Wellenleiterkreuzungen auch weitere Schalter zu verwenden, wobei die weiteren Schalter - wie die Wellenleiterkreuzungen - zwei Eingänge und zwei Ausgänge aufweisen können. Die Wellenleiterkreuzungen könnten also durch solche Schalter ersetzt werden. In diesem Fall wäre es möglich, jede Lichtquelle auf jeden Abstrahlpunkt wahlweise zu schalten. Damit könnte jede Lichtquelle grundsätzlich jeden Teil-Sichtbereich abtasten.

Wie erwähnt, kann der optoelektronische Sensor zur optischen Distanzmessung ausgebildet sein. Insbesondere kann jede Lichtquelle einem einzelnen Messkanal zugeordnet sein, so dass mit jeder Lichtquelle je ein Distanzwert ermittelt werden kann.

Erfindungsgemäß ist jede Lichtquelle Teil eines jeweils einkanaligen FMCW-Systems zur Distanzmessung zu dem Objekt. Für jede Lichtquelle kann also eine separate Entfernungsmessung zum Objekt durchgeführt werden. Die Entfernungsmessung erfolgt dabei insbesondere von dem jeweils gerade für die Lichtquelle verwendeten Abstrahlpunkt aus. Die einkanaligen FMCW-Systeme können zudem auch ausgebildet sein, eine Radialgeschwindigkeitsmessung und/oder eine polarisationsabhängige Intensitätsmessung anhand von von dem Objekt rückgestrahltem Sendelicht vorzunehmen.

Ein FMCW-System ist ein System, welches eine frequenzmodulierte kontinuierliche Welle aussendet (FMCW für Frequency Modulated Continuous Wave).

Bei einem FMCW-System ist dementsprechend der Sendelichtstrahl frequenzmoduliert, wobei der Sendelichtstrahl wiederholt einen vorbestimmten Frequenzhub durchläuft, während er in den Sichtbereich des Sensors abgestrahlt wird. Die Frequenz des Sendelichts ändert sich somit ständig. Wird nun von einem Objekt zurückgestrahltes Sendelicht von einem Detektor des optoelektronischen Sensors erfasst, so besitzt das rückgestrahlte Sendelicht aufgrund der Lichtlaufzeit eine andere Frequenz als das zum Empfangszeitpunkt gerade gesendete Sendelicht. Aus diesem Frequenzunterschied kann dann die Entfernung zu dem Objekt bestimmt werden.

Um eine schnelle und möglichst genaue Entfernungsmessung zu ermöglichen, kann ein Frequenzhub von beispielsweise 20, 100 oder gar 200 GHz innerhalb einer Modulationszeitdauer von beispielsweise 2, 5 oder 10 µs durchlaufen werden. Der Frequenzhub kann beispielsweise dadurch erzeugt werden, dass die Wellenlänge der optischen Strahlung des Sendelichts z.B. beginnend bei einer unteren Frequenz in der Modulationszeitdauer bis zu einer oberen Frequenz geändert wird (oder umgekehrt). Der Unterschied zwischen der momentan gesendeten Frequenz und der Frequenz des empfangenen zurückgestrahlten Sendelichts kann beispielsweise durch Mischung des zurückgestrahlten Sendelichts mit einem Teil des gerade erzeugten Sendelichts ermittelt werden.

Gemäß einer weiteren Ausführungsform wird das von dem Objekt zurückgestrahlte Sendelicht an den Abstrahlpunkten in das photonische Netzwerk eingekoppelt und mittels des photonischen Netzwerks dem Detektor zugeführt, wobei für jede Lichtquelle bevorzugt ein separater Detektor vorhanden ist. Das zurückgestrahlte Sendelicht kann den gleichen Lichtpfad durch das photonische Netzwerk verwenden, wie das Sendelicht der jeweiligen Lichtquelle. Das zurückgestrahlte Sendelicht kann insbesondere über einen Zirkulator oder mittels anderer Einrichtungen aus dem Lichtpfad ausgekoppelt, von dem Sendelicht getrennt und dem Detektor zugeführt werden. Insbesondere kann der Zirkulator zwischen der jeweiligen Lichtquelle und dem ersten optischen Schalter des photonischen Netzwerks angeordnet sein.

Alternativ kann das zurückgestrahlte Sendelicht über eine von dem Sendelicht nicht verwendete, separate Optik dem Detektor zugeführt werden. Weiter alternativ oder zusätzlich kann das zurückgestrahlte Sendelicht und das Sendelicht anhand der Polarisation unterschieden werden. Auf diese Weise kann das zurückgestrahlte Sendelicht anhand seiner Polarisation einer von dem Sendelicht nicht verwendeten, separate Optik und schließlich dem Detektor zugeführt werden.

Erfindungsgemäß verwenden zumindest die erste und die zweite Lichtquelle unterschiedliche Wellenlängen und/oder unterschiedliche Wellenlängenbereiche für das Sendelicht. Insbesondere können auch alle Lichtquellen unterschiedliche Wellenlängen und/oder unterschiedliche Wellenlängenbereiche für das Sendelicht verwenden. Die Wellenlängen und/oder die Grenzwellenlängen der Wellenlängenbereiche können sich beispielsweise um zumindest 0,1 %, 1%, 5% oder 10% unterscheiden. Die von den Lichtquellen verwendeten Wellenlängen können sich insbesondere zum Zeitpunkt der Erzeugung des Sendelichts voneinander unterscheiden. Nichtsdestotrotz kann beispielsweise eine erste Lichtquelle zu einem späteren Zeitpunkt eine Wellenlänge verwenden, die zu einem früheren Zeitpunkt von einer zweiten Lichtquelle bereits genutzt wurde. Durch die unterschiedlichen Wellenlängen kann ein Übersprechen ("cross-talk") in Wellenleiterkreuzungen minimiert werden. Überdies können Fehl-Detektionen von zurückgestrahltem Sendelicht anderer Lichtquellen reduziert werden.

Gemäß einer weiteren Ausführungsform ist zumindest einer der Abstrahlpunkte, bevorzugt jeder der Abstrahlpunkte, mit einem optischen Verstärker gekoppelt. Bei dem optischen Verstärker kann es sich beispielsweise um einen SOA (Semiconductor Optical Amplifier) handeln. Durch den optischen Verstärker können Verluste in dem photonischen Netzwerk ausgeglichen werden, bevor das Sendelicht von den Abstrahlpunkten in die Teil-Sichtbereiche abgestrahlt wird.

Weiterer Gegenstand der Erfindung ist ein Verfahren zum Betrieb eines optoelektronischen Sensors gemäß Anspruch 12.

Gemäß einer Ausführungsform des Verfahrens umfasst der optoelektronische Sensor zumindest noch eine dritte Lichtquelle, wobei Sendelicht der ersten, zweiten und dritten Lichtquelle, insbesondere zeitgleich, drei direkt nebeneinander angeordneten Abstrahlpunkten, bevorzugt zeitgleich, zugeführt und in drei direkt nebeneinander angeordnete Teil-Sichtbereiche abgestrahlt wird. Bei vier Lichtquellen können dementsprechend vier direkt nebeneinander angeordnete Abstrahlpunkte verwendet werden. Bei noch mehr Lichtquellen gilt die Offenbarung entsprechend.

Durch die Verwendung von mehreren direkt nebeneinander angeordneten Abstrahlpunkten kann eine gleichzeitige oder zeitlich überlappende Abtastung der verschiedenen Teil-Sichtbereiche erfolgen, wodurch innerhalb kurzer Zeit detaillierte Informationen über das Objekt und den Abstand des Objekts in verschiedenen Teil-Sichtbereichen erfasst werden können.

Dem vorgenannten Aussenden von Sendelicht aus zumindest drei direkt nebeneinander angeordneten Abstrahlpunkten kann auch ein Grobscan vorausgehen, um die Position des Objekts zunächst grob zu erfassen. Hierzu kann Sendelicht der verschiedenen Lichtquellen Abstrahlpunkten zugeführt werden, welche jeweils durch zumindest einen oder mehrere andere Abstrahlpunkte von anderen gerade aktiven Abstrahlpunkten beabstandet sind. Beispielsweise kann in jeder der oben erläuterten Gruppen genau ein Abstrahlpunkt verwendet werden, wobei für die verschiedenen Gruppen Sendelicht verschiedener Lichtquellen verwendet wird. Ist dann die grobe Position des Objekts bekannt, so können dann die Lichtquellen auf direkt nebeneinander angeordnete Abstrahlpunkte aufgeschaltet werden, um Sendelicht in Teil-Sichtbereiche abzustrahlen, in welchen das Objekt voraussichtlich erfasst werden kann.

Für das erfindungsgemäße Verfahren gelten die zum erfindungsgemäßen optoelektronischen Sensor getroffenen Aussagen entsprechend, dies gilt insbesondere hinsichtlich Vorteilen und Ausführungsformen.

Nachfolgend wird die Erfindung rein beispielhaft unter Bezugnahme auf die Zeichnungen beschrieben. Es zeigt:
- Fig. 1: einen optoelektronischen Sensor und ein Objekt im Sichtbereich in schematischer Ansicht;
- Fig. 2: Lichtquellen des optoelektronischen Sensors von Fig. 1 sowie ein photonisches Netzwerk;
- Fig. 3: einen optischen Schalter;
- Fig. 4: eine Wellenleiterkreuzung; und
- Fig. 5: eine alternative Darstellungsform des photonischen Netzwerks.

Fig. 1 zeigt einen optoelektronischen Sensor 10, welcher Sendelicht 12 in einen Sichtbereich 14 emittiert. Der Sichtbereich kann auch als Field of View (FoV) bezeichnet werden.

Im Sichtbereich 14 befindet sich ein zu erfassendes Objekt 16, auf welches das Sendelicht 12 auftrifft und zurückgestrahlt wird. Dieses zurückgestrahlte Sendelicht 18 gelangt zurück zum Sensor 10 und wird dort von einem (nicht gezeigten) Detektor erfasst. Durch die Erfassung des zurückgestrahlten Sendelichts 18 kann durch Ermittlung der Lichtlaufzeit der Abstand zwischen dem Sensor 10 und dem Objekt 16 berechnet werden.

Der optoelektronische Sensor 10 umfasst eine Steuereinrichtung 20, welche beispielsweise die Ermittlung der Distanz zwischen dem Sensor 10 und dem Objekt 16 vornimmt. Die Steuereinrichtung 20 umfasst vier einkanalige FMCW-Systeme (nicht gezeigt) mit jeweils einer Lichtquelle 22. Die Lichtquellen 22 der einkanaligen FMCW-Systeme werden von der Steuereinrichtung 20 gesteuert. In der Fig. 1 sind von den Lichtquellen 22 schematisch nur Austrittspunkte gezeigt.

Die Lichtquellen 22 geben an den Austrittspunkten Sendelicht 12 an ein photonisches Netzwerk 24 ab. Von dem photonischen Netzwerk 24 wird das Sendelicht 12 wahlweise verschiedenen Abstrahlpunkten 26 zugeführt. Von den Abstrahlpunkten 26 gelangt das Sendelicht 12 durch eine als Linse 28 ausgeführte Sendeoptik in den Sichtbereich 14. Von jedem Abstrahlpunkt 26 aus kann nur ein Teil-Sichtbereich 30 mit Sendelicht 12 bestrahlt und damit optisch abgetastet werden.

Die Details des photonischen Netzwerks 24 sind in Fig. 2 gezeigt. In Fig. 2 sind die vier Lichtquellen 22 detaillierter als erste Lichtquelle 22a, zweite Lichtquelle 22b, dritte Lichtquelle 22c und vierte Lichtquelle 22d dargestellt. Mit jeder der Lichtquellen 22 ist direkt ein optischer Schalter 32 einer ersten Stufe 34 gekoppelt.

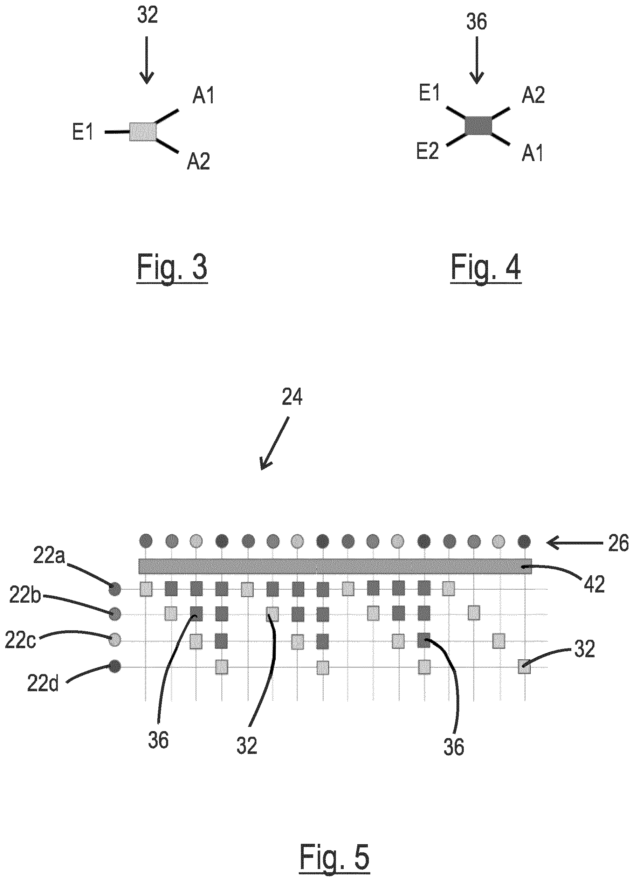

Wie Fig. 3 zeigt, umfasst jeder optische Schalter 32 einen Eingang E1 und zwei Ausgänge A1, A2. Am Eingang E1 ankommendes Sendelicht, kann wahlweise, beispielsweise gesteuert durch die Steuereinrichtung 20, nur aus dem Ausgang A1 oder nur dem Ausgang A2 austreten.

Mit den Ausgängen A1, A2 der optischen Schalter 32 sind Wellenleiterkreuzungen 36 verbunden.

Die Wellenleiterkreuzungen 36 umfassen, wie in Fig. 4 gezeigt, zwei Eingänge E1, E2 und zwei Ausgänge A1, A2. Dabei liegen sich der Eingang E1 und der Ausgang A1 sowie der Eingang E2 und der Ausgang A2 jeweils diagonal gegenüber, so dass sich der gewünschte Kreuzungseffekt ergibt. In den Eingang E1 zugeführtes Sendelicht tritt nur am Ausgang A1 wieder aus. Am Eingang E2 ankommendes Sendelicht tritt nur am Ausgang A2 wieder aus.

Die sechs Wellenleiterkreuzungen 36 der ersten Stufe 34 sind derart angeordnet, dass die sich aus den beiden Ausgängen A1, A2 jedes einzelnen Schalters 32 ergebenden Lichtpfade zumindest einen Ausgang (bzw. die entsprechenden Lichtpfade) jedes anderen Schalters 32 der ersten Stufe 34 einmal kreuzen. Wird beispielsweise der direkt mit der Lichtquelle 22d verbundene Schalter 32 betrachtet, so ist der (in der Figur obere) Ausgang A1 mit einer Wellenleiterkreuzung 36 und der (in der Figur untere) Ausgang A2 mit zwei Wellenleiterkreuzungen verbunden. Dadurch kreuzt der obere Ausgang A1 des Schalters 32 den unteren Ausgang A2 des in der Figur obersten Schalters 32 und der untere Ausgang A2 des Schalters 32 kreuzt die beiden oberen Ausgänge A1 der beiden unteren Schalter 32 der ersten Stufe 34.

Insgesamt ergeben sich für die erste Stufe 34 somit acht Ausgänge bzw. Ausgangspfade, welche mit optischen Schaltern einer zweiten Stufe 38 gekoppelt sind. Die Ausgänge der Schalter 32 der zweiten Stufe 38 sind jeweils insgesamt mit sieben Wellenleiterkreuzungen 36 verbunden, so dass die Ausgänge eines Schalters 32 der zweiten Stufe 38 zumindest einen Ausgang jedes anderen Schalters einmal kreuzen.

Nach der zweiten Stufe 38 liegen somit sechzehn Ausgänge vor, die sechzehn Abstrahlpunkten 26 zugeführt werden. Die sechzehn Abstrahlpunkte 26 sind in vier Gruppen 40 gegliedert, wobei in jeder Gruppe 40 jeder der Abstrahlpunkte 26 einer anderen Lichtquelle 22 zuordenbar ist. Die Abstrahlpunkte 26, welche der ersten Lichtquelle 22a zuordenbar sind und welchen dementsprechend Sendelicht 12 der ersten Lichtquelle 22a zuführbar ist, sind in der Figur mit 1.x gekennzeichnet. Die der zweiten Lichtquelle 22b zuordenbaren Abstrahlpunkte 26 sind in entsprechender Weise mit 2.x gekennzeichnet. Abstrahlpunkte der ersten Gruppe 40 sind mit x.1, Abstrahlpunkte der zweiten Gruppe mit x.2 benannt. Für die weiteren Lichtquellen 22c, 22d und die weiteren Gruppen 40 erfolgt die Benennung entsprechend.

Durch die Wellenleiterkreuzungen ist es möglich, dass zwischen zwei verschiedenen Abstrahlpunkten 26, welchen Sendelicht derselben Lichtquelle 22 zuführbar ist, jeweils für jede andere Lichtquelle 22 ein Abstrahlpunkt 26 angeordnet ist, welchem Sendelicht 12 einer der anderen Lichtquellen 22 zugeführt werden kann.

Insbesondere die Abstrahlpunkte 2.2, 3.2, 4.2, 1.3, 2.3 und 3.3 können jeweils einen kleineren Abstand zueinander aufweisen als die anderen Abstrahlpunkte. Auf diese Weise kann im zentral im Sichtbereich 14 eine erhöhte Auflösung erzielt werden.

In Fig. 2 ist die Anordnung des photonischen Netzwerks 24 so dargestellt, wie die Schalter 32 und die Wellenleiterkreuzungen 36 in einer photonischen integrierten Schaltung räumlich angeordnet sein könnten. Eine andere Darstellungsweise des photonischen Netzwerks 24, nämlich als Matrixschaltung, ist in Fig. 5 gezeigt. Das photonische Netzwerk 24 von Fig. 5 unterscheidet sich von dem photonischen Netzwerk 24 von Fig. 2 lediglich durch einen optischen Verstärker 42. Es versteht sich, dass für jeden Abstrahlpunkt 26 auch ein separater optischer Verstärker 42 vorgesehen sein könnte.

Im Betrieb des optischen Sensors 10 können die vier Lichtquellen 22 zunächst einen Grob-Scan ausführen, wobei beispielsweise die Abstrahlpunkte 1.1, 2.2, 3.3 und 4.4 verwendet werden. Wird dann anhand des zurückgestrahlten Sendelichts 18 festgestellt, dass sich das Objekt 16 in Teil-Sichtbereichen 30 befindet, welche zu Abstrahlpunkten 26 der zweiten Gruppe 40 gehören, so können die optischen Schalter 32 dann so eingestellt werden, dass sämtliche Lichtquellen 22 gleichzeitig Sendelicht über die Abstrahlpunkte 26 der zweiten Gruppe (d.h. die Abstrahlpunkte 1.2, 2.2, 3.2 und 4.2) in den Sichtbereich 14 emittieren. Das Objekt 16 kann dann sehr schnell und sehr genau erfasst werden.

### Bezugszeichenliste

- 10: optoelektronischer Sensor
- 12: Sendelicht
- 14: Sichtbereich
- 16: Objekt
- 18: zurückgestrahltes Sendelicht
- 20: Steuereinrichtung
- 22: Lichtquellen
- 24: photonisches Netzwerk
- 26: Abstrahlpunkt
- 28: Linse
- 30: Teil-Sichtbereich
- 32: optischer Schalter
- 34: erste Stufe
- 36: Wellenleiterkreuzung
- 38: zweite Stufe
- 40: Gruppe
- 42: optischer Verstärker

## Patentansprüche

1. Optoelektronischer Sensor (10) zur Erfassung eines Objekts (16) in einem Sichtbereich (14) des Sensors (10), mit
- mehreren Lichtquellen (22) zum Erzeugen von Sendelicht (12), wobei die Lichtquellen (22) zumindest eine erste und eine zweite Lichtquelle (22a, 22b) umfassen,
- einer Sendeoptik (28) zum Projizieren von Sendelicht (12) in den Sichtbereich (14),
- zumindest einem Detektor zur Erfassung von von dem Objekt (16) zurückgestrahltem Sendelicht (18),
wobei die Lichtquellen (22) Sendelicht (12) an ein photonisches Netzwerk (24) abgeben,
wobei das photonische Netzwerk (24) mehrere Abstrahlpunkte (26) aufweist, welchen jeweils Sendelicht (12) jeweils genau einer Lichtquelle (22), zuführbar ist, wobei mehrere direkt nebeneinander angeordnete oder benachbarte Abstrahlpunkte (26) ausgebildet sind, Sendelicht (12) in mehrere, bevorzugt direkt, nebeneinander angeordnete oder benachbarte Teil-Sichtbereiche (30) abzustrahlen,
wobei das photonische Netzwerk (24) ausgebildet ist, Sendelicht (12) derselben Lichtquelle (22) zumindest zwei verschiedenen Abstrahlpunkten (26) zuzuführen,
wobei
zwischen den zwei verschiedenen Abstrahlpunkten (26), welchen Sendelicht (12) der ersten Lichtquelle (22a) zuführbar ist, zumindest ein Abstrahlpunkt (26) angeordnet ist, welchem Sendelicht (12) der zweiten Lichtquelle (22b) zuführbar ist,
wobei jede Lichtquelle (22) Teil eines jeweils einkanaligen FMCW-Systems zur Distanzmessung zu dem Objekt (16) ist,
wobei zumindest die erste und die zweite Lichtquelle (22a, 22b) unterschiedliche Wellenlängen und/oder Wellenlängenbereiche für das Sendelicht (12) verwenden.

2. Optoelektronischer Sensor (10) nach Anspruch 1,
wobei das photonische Netzwerk (24) zumindest einen optische Schalter (32) für jede Lichtquelle (22) umfasst, wobei der jeweilige Schalter (32) ausgebildet ist, Sendelicht (12) zumindest zwei verschiedenen Lichtpfaden in dem photonischen Netzwerk (24) zuzuleiten, um Sendelicht (12) zumindest zwei verschiedenen Abstrahlpunkten (26) zuzuführen.

3. Optoelektronischer Sensor (10) nach Anspruch 1 oder 2,
wobei das photonische Netzwerk (24) zumindest eine Wellenleiterkreuzung (36) umfasst, um Sendelicht (12) der zweiten Lichtquelle (22b) dem Abstrahlpunkt (26) zuzuführen, welcher zwischen den zwei verschiedenen Abstrahlpunkten (26) liegt, welchen Sendelicht (12) der ersten Lichtquelle (22a) zuführbar ist.

4. Optoelektronischer Sensor (10) nach einem der vorstehenden Ansprüche, wobei der Sensor (10) zumindest drei, vier oder mehr als vier Lichtquellen (22) umfasst, wobei zwischen zwei verschiedenen Abstrahlpunkten (26), welchen Sendelicht (12) derselben Lichtquelle (22) zuführbar ist, jeweils für jede andere Lichtquelle (22) ein Abstrahlpunkt (26) angeordnet ist, welchem Sendelicht (12) einer der anderen Lichtquellen (22) zugeführt werden kann.

5. Optoelektronischer Sensor (10) nach einem der vorstehenden Ansprüche, wobei das photonische Netzwerk (24) eine photonische integrierte Schaltung aufweist, welche insbesondere den optischen Schalter (32) und die Wellenleiterkreuzung (36) aufweist.

6. Optoelektronischer Sensor (10) nach einem der vorstehenden Ansprüche, wobei die Abstrahlpunkte (26) entlang einer geraden Linie angeordnet sind und/oder
wobei der optoelektronische Sensor (10) eine Gruppe (40) von direkt nebeneinander angeordneten Abstrahlpunkten (26) aufweist, wobei die Anzahl der Abstrahlpunkte (26) in der Gruppe (40) der Anzahl der Lichtquellen (22) entspricht, wobei jedem der Abstrahlpunkte (26) in der Gruppe (40) Sendelicht (12) einer anderen Lichtquelle (22) zuführbar ist,
wobei mehrere Gruppen (40) bevorzugt aufeinanderfolgend angeordnet sind.

7. Optoelektronischer Sensor (10) nach einem der vorstehenden Ansprüche, wobei ein Teil der Abstrahlpunkte (26) ausgebildet ist, Sendelicht (12) in dichter nebeneinander angeordnete Teil-Sichtbereiche (30) abzustrahlen.

8. Optoelektronischer Sensor (10) nach einem der vorstehenden Ansprüche, wobei der optoelektronische Sensor (10) ausgebildet ist, einem Teil der Abstrahlpunkte (26) Sendelicht (12) für eine längere Zeitdauer als anderen Abstrahlpunkten (26), welchen Sendelicht zugeführt wird, zuzuführen.

9. Optoelektronischer Sensor (10) nach einem der vorstehenden Ansprüche, wobei das photonische Netzwerk (24) eine erste Stufe (34) mit optischen Schaltern (32) und Wellenleiterkreuzungen (36) umfasst, wobei die optischen Schalter (32) jeweils einen Eingang und zwei Ausgänge aufweisen, wobei die Ausgänge jedes Schalters (32) mit mehreren Wellenleiterkreuzungen (36) verbunden sind, sodass die Ausgänge eines Schalters (32) zumindest einen Ausgang jedes anderen Schalters (32) einmal kreuzen.

10. Optoelektronischer Sensor (10) nach Anspruch 9,
wobei das photonische Netzwerk (24) eine zweite und/oder eine oder mehrere weitere Stufen (38) mit optischen Schaltern (32) und Wellenleiterkreuzungen (36) umfasst, wobei die optischen Schalter (32) jeweils einen Eingang und zwei Ausgänge aufweisen, wobei die Ausgänge jedes Schalters (32) mit mehreren Wellenleiterkreuzungen (36) verbunden sind, sodass die Ausgänge eines Schalters (32) zumindest einen Ausgang jedes anderen Schalters (32) einmal kreuzen, wobei jeweils ein optischer Schalter (32) der zweiten und/oder weiteren Stufe (38) für einen Ausgang der vorherigen Stufe (34) vorgesehen ist.

11. Optoelektronischer Sensor (10) nach einem der vorstehenden Ansprüche, wobei das von dem Objekt (16) zurückgestrahlte Sendelicht (18) an den Abstrahlpunkten (26) in das photonische Netzwerk (24) eingekoppelt und mittels des photonischen Netzwerks (24) dem Detektor zugeführt wird, wobei für jede Lichtquelle (22) bevorzugt ein separater Detektor vorhanden ist.

12. Verfahren zum Betrieb eines optoelektronischen Sensors (10), welches zur Erfassung eines Objekts (16) in einem Sichtbereich (14) des Sensors (10) dient, wobei
- eine erste und eine zweite Lichtquelle (22a, 22b) Sendelicht (12) erzeugen, wobei die Lichtquellen (22) Sendelicht (12) an ein photonisches Netzwerk (24) abgeben, wobei das Sendelicht (12) mehreren Abstrahlpunkten (26) des photonischen Netzwerks (24) zugeführt wird, wobei den Abstrahlpunkten (26) jeweils Sendelicht (12) jeweils genau einer Lichtquelle (22) zugeführt wird, wobei aus mehreren direkt benachbarten Abstrahlpunkten (26) Sendelicht (12) in mehrere direkt nebeneinander angeordnete Teil-Sichtbereiche (30) abgestrahlt wird,
- zumindest ein Detektor von dem Objekt (16) zurückgestrahltes Sendelicht (18) erfasst,
wobei Sendelicht (12) der zweiten Lichtquelle (22b) zumindest einem Abstrahlpunkt (26) zugeführt wird, welcher zwischen zwei Abstrahlpunkten (26) liegt, welchen Sendelicht (12) der ersten Lichtquelle (22a) zuführbar ist, wobei jede Lichtquelle (22) Teil eines jeweils einkanaligen FMCW-Systems zur Distanzmessung zu dem Objekt (16) ist,
wobei zumindest die erste und die zweite Lichtquelle (22a, 22b) unterschiedliche Wellenlängen und/oder Wellenlängenbereiche für das Sendelicht (12) verwenden.

13. Verfahren nach Anspruch 12, wobei
der optoelektronische Sensor (10) zumindest noch eine dritte Lichtquelle (22) umfasst, wobei Sendelicht (12) der ersten, zweiten und dritten Lichtquelle (22), insbesondere gleichzeitig, drei direkt nebeneinander angeordneten Abstrahlpunkten (26) zugeführt und in drei direkt nebeneinander angeordnete Teil-Sichtbereiche (30) abgestrahlt wird.

## Claims

1. An optoelectronic sensor (10) for detecting an object (16) in a field of view (14) of the sensor (10), said optoelectronic sensor (10) comprising
- a plurality of light sources (22) for generating transmission light (12), wherein the light sources (22) comprise at least a first and a second light source (22a, 22b);
- a transmission optics (28) for projecting transmission light (12) into the field of view (14);
- at least one detector for detecting transmission light (18) reflected by the object (16),
wherein the light sources (22) emit transmission light (12) to a photonic network (24),
wherein the photonic network (24) has a plurality of irradiation points (26) to each of which transmission light (12), in each case of exactly one light source (22), can be supplied, wherein a plurality of irradiation points (26) which are arranged directly next to one another or which are directly adjacent are configured to irradiate transmission light (12) into a plurality of partial fields of view (30) which are arranged next to one another or which are adjacent, preferably arranged directly next to one another or directly adjacent,
wherein the photonic network (24) is configured to supply transmission light (12) of the same light source (22) to at least two different irradiation points (26),
wherein,
between the two different irradiation points (26) to which transmission light (12) of the first light source (22a) can be supplied, at least one irradiation point (26) is arranged to which transmission light (12) of the second light source (22b) can be supplied,
wherein each light source (22) is part of an FMCW system, in each case a single-channel FMCW system, for measuring the distance from the object (16),
wherein at least the first and the second light source (22a, 22b) use different wavelengths and/or wavelength ranges for the transmission light (12).

2. An optoelectronic sensor (10) according to claim 1,
wherein the photonic network (24) comprises at least one optical switch (32) for each light source (22), wherein the respective switch (32) is configured to feed transmission light (12) to at least two different light paths in the photonic network (24) in order to supply transmission light (12) to at least two different irradiation points (26).

3. An optoelectronic sensor (10) according to claim 1 or 2,
wherein the photonic network (24) comprises at least one waveguide intersection (36) to supply transmission light (12) of the second light source (22b) to the irradiation point (26) which is disposed between the two different irradiation points (26) to which transmission light (12) of the first light source (22a) can be supplied.

4. An optoelectronic sensor (10) according to any one of the preceding claims, wherein the sensor (10) comprises at least three, four or more than four light sources (22), wherein, between two different irradiation points (26) to which transmission light (12) of the same light source (22) can be supplied, an irradiation point (26) is in each case arranged for each other light source (22), to which irradiation point (26) transmission light (12) of one of the other light sources (22) can be supplied.

5. An optoelectronic sensor (10) according to any one of the preceding claims, wherein the photonic network (24) has a photonic integrated circuit which in particular has the optical switch (32) and the waveguide intersection (36).

6. An optoelectronic sensor (10) according to any one of the preceding claims, wherein the irradiation points (26) are arranged along a straight line, and/or
wherein the optoelectronic sensor (10) has a group (40) of irradiation points (26) arranged directly next to one another, wherein the number of irradiation points (26) in the group (40) corresponds to the number of light sources (22), wherein transmission light (12) of another light source (22) can be supplied to each of the irradiation points (26) in the group (40),
wherein a plurality of groups (40) are preferably arranged following one another.

7. An optoelectronic sensor (10) according to any one of the preceding claims, wherein some of the irradiation points (26) are configured to irradiate transmission light (12) into partial fields of view (30) arranged more closely next to one another.

8. An optoelectronic sensor (10) according to any one of the preceding claims, wherein the optoelectronic sensor (10) is configured to supply transmission light (12) to some of the irradiation points (26) for a longer period of time than to other irradiation points (26) to which transmission light is supplied.

9. An optoelectronic sensor (10) according to any one of the preceding claims, wherein the photonic network (24) comprises a first stage (34) having optical switches (32) and waveguide intersections (36), wherein the optical switches (32) each have one input and two outputs, wherein the outputs of each switch (32) are connected to a plurality of waveguide intersections (36) so that the outputs of one switch (32) intersect at least one output of each other switch (32) once.

10. An optoelectronic sensor (10) according to claim 9,
wherein the photonic network (24) comprises a second and/or one or more further stages (38) having optical switches (32) and waveguide intersections (36), wherein the optical switches (32) each have one input and two outputs, wherein the outputs of each switch (32) are connected to a plurality of waveguide intersections (36) so that the outputs of one switch (32) intersect at least one output of each other switch (32) once, wherein a respective optical switch (32) of the second and/or further stage (38) is provided for an output of the previous stage (34).

11. An optoelectronic sensor (10) according to any one of the preceding claims, wherein the transmission light (18) reflected by the object (16) is coupled into the photonic network (24) at the irradiation points (26) and is supplied to the detector by means of the photonic network (24), wherein a separate detector is preferably present for each light source (22).

12. A method of operating an optoelectronic sensor (10) that serves to detect an object (16) in a field of view (14) of the sensor (10), wherein
- a first and a second light source (22a, 22b) generate transmission light (12), wherein the light sources (22) emit transmission light (12) to a photonic network (24), wherein the transmission light (12) is supplied to a plurality of irradiation points (26) of the photonic network (24), wherein transmission light (12), in each case of exactly one light source (22), is in each case supplied to the irradiation points (26), wherein transmission light (12) is irradiated from a plurality of directly adjacent irradiation points (26) into a plurality of partial fields of view (30) arranged directly next to one another,
- at least one detector detects transmission light (18) reflected by the object (16),
wherein transmission light (12) of the second light source (22b) is supplied to at least one irradiation point (26) which is disposed between two irradiation points (26) to which transmission light (12) of the first light source (22a) can be supplied, wherein each light source (22) is part of an FMCW system, in each case a single-channel FMCW system, for measuring the distance from the object (16),
wherein at least the first and the second light source (22a, 22b) use different wavelengths and/or wavelength ranges for the transmission light (12).

13. A method according to claim 12, wherein
the optoelectronic sensor (10) at least also comprises a third light source (22), wherein transmission light (12) of the first, second and third light source (22) is supplied, in particular simultaneously supplied, to three irradiation points (26) arranged directly next to one another and is irradiated into three partial fields of view (30) arranged directly next to one another.

## Revendications

1. Capteur optoélectronique (10) pour détecter un objet (16) dans une zone de vision (14) du capteur (10), comprenant
- plusieurs sources de lumière (22) pour produire une lumière d'émission (12), les sources de lumière (22) comprenant au moins une première et une deuxième source de lumière (22a, 22b),
- une optique d'émission (28) pour projeter la lumière d'émission (12) dans la zone de vision (14),
- au moins un détecteur pour détecter la lumière d'émission (18) renvoyée par l'objet (16),
dans lequel
les sources de lumière (22) émettent une lumière d'émission (12) vers un réseau photonique (24),
le réseau photonique (24) présente plusieurs points de rayonnement (26) auxquels peut être amenée une lumière d'émission (12) respective de précisément une source de lumière (22) respective, plusieurs points de rayonnement (26) juxtaposés ou adjacents directement les uns aux autres étant conçus pour rayonner la lumière d'émission (12) dans plusieurs zones de vision partielles (30) juxtaposées ou adjacentes de préférence directement les unes aux autres,
le réseau photonique (24) est conçu pour amener la lumière d'émission (12) de la même source de lumière (22) vers au moins deux points de rayonnement (26) différents,
entre les deux points de rayonnement (26) différents, auxquels peut être amenée la lumière d'émission (12) de la première source de lumière (22a), est prévu au moins un point de rayonnement (26) auquel peut être amenée la lumière d'émission (12) de la deuxième source de lumière (22b), chaque source de lumière (22) fait partie d'un système FMCW respectif à canal unique pour mesurer la distance à l'objet (16),
au moins les première et deuxième sources de lumière (22a, 22b) utilisent des longueurs d'onde et/ou des plages de longueurs d'onde différentes pour la lumière d'émission (12).

2. Capteur optoélectronique (10) selon la revendication 1,
dans lequel le réseau photonique (24) comprend au moins un commutateur optique (32) pour chaque source de lumière (22), le commutateur respectif (32) étant conçu pour acheminer la lumière d'émission (12) vers au moins deux trajets lumineux différents dans le réseau photonique (24), afin d'amener la lumière d'émission (12) vers au moins deux points de rayonnement (26) différents.

3. Capteur optoélectronique (10) selon la revendication 1 ou 2,
dans lequel le réseau photonique (24) comprend au moins un croisement de guides d'ondes (36) pour amener la lumière d'émission (12) de la deuxième source de lumière (22b) vers le point de rayonnement (26) situé entre les deux points de rayonnement (26) différents auxquels peut être amenée la lumière d'émission (12) de la première source de lumière (22a).

4. Capteur optoélectronique (10) selon l'une des revendications précédentes, dans lequel le capteur (10) comprend au moins trois, quatre ou plus de quatre sources de lumière (22),
entre deux points de rayonnement (26) différents, auxquels peut être amenée la lumière d'émission (12) de la même source de lumière (22), est prévu un point de rayonnement (26) pour chaque autre source de lumière respective (22), auquel peut être amenée la lumière d'émission (12) de l'une des autres sources de lumière (22).

5. Capteur optoélectronique (10) selon l'une des revendications précédentes, dans lequel le réseau photonique (24) comprend un circuit photonique intégré comprenant en particulier le commutateur optique (32) et le croisement de guides d'ondes (36).

6. Capteur optoélectronique (10) selon l'une des revendications précédentes, dans lequel les points de rayonnement (26) sont prévus le long d'une ligne droite, et/ou
le capteur optoélectronique (10) présente un groupe (40) de points de rayonnement (26) juxtaposés directement les uns aux autres, le nombre de points de rayonnement (26) dans le groupe (40) correspondant au nombre de sources de lumière (22), une lumière d'émission (12) d'une autre source de lumière (22) pouvant être amenée vers chacun des points de rayonnement (26) dans le groupe (40),
plusieurs groupes (40) sont de préférence disposés les uns à la suite des autres.

7. Capteur optoélectronique (10) selon l'une des revendications précédentes, dans lequel une partie des points de rayonnement (26) est conçue pour rayonner la lumière d'émission (12) dans des zones de vision partielles (30) disposées plus près les unes des autres.

8. Capteur optoélectronique (10) selon l'une des revendications précédentes, dans lequel le capteur optoélectronique (10) est conçu pour amener la lumière d'émission (12) vers une partie des points de rayonnement (26) pendant une durée plus longue que vers les autres points de rayonnement (26) auxquels est amenée la lumière d'émission.

9. Capteur optoélectronique (10) selon l'une des revendications précédentes, dans lequel le réseau photonique (24) comprend un premier étage (34) comprenant des commutateurs optiques (32) et des croisements de guides d'ondes (36), les commutateurs optiques (32) présentant chacun une entrée et deux sorties, les sorties de chaque commutateur (32) étant reliées à une pluralité de croisements de guides d'ondes (36), de sorte que les sorties d'un commutateur (32) croisent une fois au moins une sortie de chaque autre commutateur (32).

10. Capteur optoélectronique (10) selon la revendication 9,
dans lequel le réseau photonique (24) comprend un deuxième et/ou un ou plusieurs autres étages (38) comprenant des commutateurs optiques (32) et des croisements de guides d'ondes (36), les commutateurs optiques (32) présentant chacun une entrée et deux sorties, les sorties de chaque commutateur (32) étant connectées à plusieurs croisements de guides d'ondes (36), de sorte que les sorties d'un commutateur (32) croisent une fois au moins une sortie de chaque autre commutateur (32), un commutateur optique (32) respectif du deuxième et/ou autre étage (38) étant prévu pour une sortie de l'étage précédent (34).

11. Capteur optoélectronique (10) selon l'une des revendications précédentes, dans lequel la lumière d'émission (18) renvoyée par l'objet (16) est injectée dans le réseau photonique (24) au niveau des points de rayonnement (26) et est amenée vers le détecteur au moyen du réseau photonique (24), de préférence, un détecteur séparé étant prévu pour chaque source de lumière (22).

12. Procédé de fonctionnement d'un capteur optoélectronique (10), qui sert à détecter un objet (16) dans une zone de vision (14) du capteur (10), dans lequel
- une première et une deuxième source de lumière (22a, 22b) produisent une lumière d'émission (12), les sources de lumière (22) émettant la lumière d'émission (12) vers un réseau photonique (24), la lumière d'émission (12) étant amenée à plusieurs points de rayonnement (26) du réseau photonique (24), la lumière d'émission (12) respective de précisément une source de lumière (22) respective étant amenée vers les points de rayonnement (26), la lumière d'émission (12) étant rayonnée à partir de plusieurs points de rayonnement (26) directement adjacents dans plusieurs zones de vision partielles (30) directement juxtaposées,
- au moins un détecteur détecte la lumière d'émission (18) renvoyée par l'objet (16),
la lumière d'émission (12) de la deuxième source de lumière (22b) est amenée vers au moins un point de rayonnement (26) qui se situe entre deux points de rayonnement (26) auxquels peut être amenée la lumière d'émission (12) de la première source de lumière (22a),
chaque source de lumière (22) fait partie d'un système FMCW respectif à canal unique pour mesurer la distance à l'objet (16),
au moins les première et deuxième sources de lumière (22a, 22b) utilisent des longueurs d'onde et/ou des plages de longueurs d'onde différentes pour la lumière d'émission (12).

13. Procédé selon la revendication 12, dans lequel
le capteur optoélectronique (10) comprend au moins encore une troisième source de lumière (22), la lumière d'émission (12) de la première, de la deuxième et de la troisième source de lumière (22) étant amenée, en particulier simultanément, vers trois points de rayonnement (26) directement juxtaposés et étant rayonnée dans trois zones de vision partielles (30) directement juxtaposées.
